# EUROPEAN PATENT APPLICATION

(11) **EP 1 624 330 A1**
(43) Date of publication of application: **08.02.2006**
(21) Application number: 05015363.4
(22) Date of filing: 14.07.2005

(54) **Light-intensity modulator generating second harmonic light**

(30) Priority: 15.07.2004 JP 2004208628
(71) Applicant: NORITSU KOKI CO., LTD., Wakayama-shi, Wakayama-ken 640-8550 (JP)
(72) Inventor: Yokoo, Masakazu, Noritsu Koki Co., Ltd, Wakayama-shi Wakayama-ken 640-8550 (JP); Ishii, Tomoyuki, Noritsu Koki Co., Ltd, Wakayama-shi Wakayama-ken 640-8550 (JP); Mano, Kozo, Noritsu Koki Co., Ltd, Wakayama-shi Wakayama-ken 640-8550 (JP); Oki, Yuji, Fukuoka-shi Fukuoka (JP); Okada, Tatsuo, Koga-shi Fukuoka (JP)
(74) Representative: Müller-Boré & Partner Patentanwälte

(57) **Abstract**

Disclosed is a light-intensity modulation element (10), which comprises a substrate (1) made of a nonlinear optical crystal, and a light waveguide (4) formed in a principal surface of the substrate to extend in one direction. The light waveguide includes first (PP1) and second (PP2) wavelength conversion portions for converting a part of infrared light introduced into the light waveguide (4) to a second harmonic. Each of the first and second wavelength conversion portions has a plurality of polarization structures serially disposed in the longitudinal direction of the light waveguide in such a manner that their polarities in the thickness direction of the substrate are inverted periodically and alternately in the longitudinal direction of the light waveguide. The light waveguide further includes a phase adjustment portion (PM1) located between the first and second wavelength conversion portions, and associated with a pair of electrodes (2a,2b) disposed in opposed relation to one another on opposite sides thereof. The light-intensity modulation element of the present invention can modulate a light intensity in a compact structure and with enhanced efficiency of conversion to second harmonics.

## Description

### BACKGROUND OF THE INVENTION

### 1. Field of the Invention

The present invention relates to a light-intensity modulation element for modulating the intensity of light emitted from a semiconductor laser, an intensity-modulated-light generating device comprising a semiconductor laser and the light-intensity modulation element, a laser exposure unit comprising the intensity-modulated-light generating device, and a photograph processing apparatus using the laser exposure unit as its exposure unit.

### 2. Description of the Related Art

Late years, a photograph processing apparatus for exposing/printing image data taken by a digital camera or read by a scanner onto a photosensitive material (photographic paper) has come into practical use. In this conventional photograph processing apparatus, a laser exposure unit comprising three laser sources for visible red (R), green (G) and blue (B) lights has been used as an exposure unit therefor.

In the above laser exposure unit, the laser source for outputting visible red light is composed of a semiconductor laser, and each of the laser sources for obtaining visible green and blue lights is composed of a laser generating device which includes a semiconductor laser for emitting infrared light, and a SHG (Second Harmonic Generation) element for subjecting the emitted light from the semiconductor laser to wavelength conversion so as to output the emitted light as a second harmonic (SH). In this context, a SHG element capable of highly efficient wavelength conversion as compared to a bulk type has been recently developed through the utilization of a quasi-phase matching (QPM) technique.

The quasi-phase matching can suppress the occurrence of mutual cancellation between second harmonics within a SHG element to provide enhanced conversion efficiency so as to allow the SHG element to output green and blue laser lights at a high intensity. A typical SHG element with the quasi-phase matching structure includes an optical waveguide type periodically-poled lithium niobate (Periodically-Poled LiNbO₃: PPLN) element.

Further, the photograph processing apparatus is essentially required to have a function of modulating a light intensity correspondingly to each density level of red, green and blue image data. For this purpose, most of the photograph processing apparatuses using the SHG-element- based laser source as a light source are provided with an acousto-optic modulator (AOM) serving as a light-intensity modulation element. This AOM comprises an acousto-optic medium for transmitting laser light therethrough, wherein an ultrasonic wave is applied to the acousto-optic medium during transmission of laser light to induce diffraction of the laser light by the action of an acousto-optic effect. Thus, the intensity of the laser light can be modulated, for example, by changing the intensity of the ultrasonic wave to be applied to the acousto-optic medium.

### SUMMARY OF THE INVENTION

As above, the AOM is designed to modulate a light intensity based on light diffraction. Therefore, considering a sufficient intensity modulation or a dimensional requirement for taking out diffracted light in distinction from original light, an optical length of the AOM has to be logically increased. This causes a difficulty in downsizing the AOM serving as a light-intensity modulation element. Consequently, various apparatuses, such as photograph processing apparatus, using the light-intensity modulation element, inevitably have a relatively large size.

In view of the above problems, it is an object of the present invention to provide a light-intensity modulation element capable of modulating a light intensity in a compact structure and with enhanced efficiency of conversion to second harmonics.

It is another object of the present invention to provide an intensity-modulated-light generating device comprising a semiconductor laser and the light-intensity modulation element, a laser exposure unit comprising the intensity-modulated-light generating device, and a photograph processing apparatus using the laser exposure unit as its exposure unit.

In order to achieve the above object, according to a first aspect of the present invention, there is provided a light-intensity modulation element comprising a substrate made of a nonlinear optical crystal, and a light waveguide formed in a principal surface of the substrate to extend in one direction. The light waveguide includes first and second wavelength conversion portions for converting a part of infrared light introduced into the light waveguide to a second harmonic. Each of the first and second wavelength conversion portions has a plurality of polarization structures serially disposed in the longitudinal direction of the light waveguide in such a manner that their polarities in the thickness direction of the substrate are inverted periodically and alternately in the longitudinal direction of the light waveguide. The light waveguide further includes a phase adjustment portion located between the first and second wavelength conversion portions and associated with a pair of electrodes disposed in opposed relation to one another on opposite sides thereof.

In the light-intensity modulation element of the present invention, the phase adjustment portion is operable to perform phase modulation in response to a voltage applied through the electrodes. Thus, a mixture of second harmonics wavelength-converted in the first and second wavelength conversion portions is output from the second wavelength conversion portion. Further, a second harmonic wavelength-converted in the second wavelength conversion portion is subjected to phase modulation in the phase adjustment portion. Therefore, the level of the phase modulation can be appropriately adjusted to continuously control the amplitude of the composite second harmonic.

As above, the light-intensity modulation element of the present invention can continuously control the amplitude of the composite second harmonic. Specifically, the intensity of light is derived by raising the amplitude of the light to the second power, and thereby the intensity of a second harmonic output from the light-intensity modulation element can be continuously controlled. In addition, the light-intensity modulation element of the present invention is designed to perform phase modulation or intensity modulation according to the voltage locally applied to the first phase modulation portion through the electrodes. This makes it possible to facilitate downsizing in the light-intensity modulation element.

In the light-intensity modulation element of the present invention, each of the polarization structures may have a length in the longitudinal direction of the light waveguide, which is determined based on a wavelength of the infrared light. In this case, each longitudinal length of the polarization structures can be determined with respect to each wavelength of infrared lights to be introduced therein to effectively perform the conversion to a second harmonic.

In the light-intensity modulation element of the present invention, each of the polarization structures may have a length in the longitudinal direction of the light waveguide, which is preset to allow a composite amplitude component of the converted second harmonic to be maximized. In this case, each longitudinal length of the polarization structures is preset to allow a composite amplitude component of the second harmonic output from each of the first and second wavelength conversion portion to be maximized. Thus, when light is successively transmitted through the plurality of polarization structures, second harmonics will be added together in such a manner as to increase the amplitude thereof. In addition, an unnecessary cancellation between the amplitudes of second harmonics can be avoided to achieve enhanced conversion efficiency.

In the light-intensity modulation element of the present invention, each of the first and second wavelength conversion portions may have a length in the longitudinal direction of the light waveguide, which is preset at an integral multiple of a length of each of the polarization structures in the longitudinal direction of the light waveguide. In this case, each of the first and second wavelength conversion portions composed of an integer number of the polarization structures makes it possible to prevent the occurrence of an unnecessary mutual cancellation between the amplitudes of second harmonics to be caused when the second harmonics are output from the first and second wavelength conversion portions. This makes it possible to obtain a high-intensity second harmonic and achieve enhanced conversion efficiency.

In the light-intensity modulation element of the present invention, the pair of electrodes may be designed to apply a voltage to the primary phase adjustment portion according to a light-intensity modulation signal sent thereto. In this case, a voltage is applied to the phase modulation portion through the electrode according to the light-intensity modulation signal representing a desired level of light intensity in a second harmonic to be obtained. If it is requited to provide a low light intensity, this voltage will be adjusted to allow the amplitudes of second harmonics to be mutually cancelled. If it is required to provide a high light intensity, this voltage will be adjusted to allow the amplitudes of second harmonics to be added together. Thus, the intensity of a second harmonic output from the light-intensity modulation element can be continuously changed according to the light-intensity modulation signal.

In the light-intensity modulation element of the present invention, the second harmonic may have a wavelength of blue light in the visible region. In this case, the wavelength of infrared light to be introduced and each length of the polarization structures in the first and second wavelength conversion portions are preset to allow an output from the light-intensity modulation element to have a wavelength of blue light in the visible region. This makes it possible to achieve a blue laser source capable of modulating a light intensity in a compact structure.

Alternatively, the second harmonic may have a wavelength of green light in the visible region. In this case, the wavelength of infrared light to be introduced and each length of the polarization structures in the first and second wavelength conversion portions are preset to allow an output from the light-intensity modulation element to have a wavelength of green light in the visible region. This makes it possible to achieve a green laser source capable of modulating a light intensity in a compact structure.

In the light-intensity modulation element of the present invention, the nonlinear optical crystal may be lithium niobate. In this case, a high nonlinearity can be utilized, and the wavelength conversion can be performed over a wide wavelength range with enhanced conversion efficiency.

When lithium niobate is used as the nonlinear optical crystal, and the second harmonic has a wavelength of blue light in the visible region, each of the polarization structures may have a length of 2.3 micrometers in the longitudinal direction of the light waveguide. In this case, each length of the polarization structures in the first and second wavelength conversion portions is preset to allow an output from the light-intensity modulation element to have a wavelength of blue light in the visible region. Further, the wavelength of infrared light to be introduced is selected to be converted to a second harmonic with the utmost efficiency when the longitudinal length is set at 2.3 micrometers. This makes it possible to achieve a blue laser source capable of modulating a light intensity in a compact structure. Further, the wavelength of infrared light to be conversed to a second harmonic with the utmost efficiency when the longitudinal length is set at 2.3 micrometers is 1064 nm. This infrared light source is commonly used, and thereby readily combined with the light-intensity modulation element of the present invention.

Further, when lithium niobate is used as the nonlinear optical crystal, and the second harmonic has a wavelength of green light in the visible region, each of the polarization structures may have a length of 3.2 micrometers in the longitudinal direction of the light waveguide. In this case, each length of the polarization structures in the first and second wavelength conversion portions is preset to allow an output from the light-intensity modulation element to have a wavelength of green light in the visible region. Further, the wavelength of infrared light to be introduced is selected to be converted to a second harmonic with the utmost efficiency when the longitudinal length is set at 3.2 micrometers. This makes it possible to achieve a green laser source capable of modulating a light intensity in a compact structure. Further, the wavelength of infrared light to be conversed to a second harmonic with the utmost efficiency when the longitudinal length is set at 3.2 micrometers is 946 nm. This infrared light source is commonly used, and thereby readily combined with the light-intensity modulation element of the present invention.

In the light-intensity modulation element of the present invention, the light waveguide may include an additional phase adjustment portion associated with a pair of additional electrodes disposed in opposed relation to one another on opposite sides thereof, and an additional wavelength conversion portion for converting a part of infrared light introduced into the light waveguide to a second harmonic. The additional wavelength conversion portion has a plurality of polarization structures serially disposed in the longitudinal direction of the light waveguide in such a manner that their polarities in the thickness direction of the substrate are inverted periodically and alternately in the longitudinal direction of the light waveguide. The additional phase adjustment portion and the additional wavelength conversion portion are disposed adjacent to the second wavelength conversion portion and serially in the longitudinal direction of the light waveguide in this order.

In this case, the phase modulation can be performed in not only the aforementioned or first phase adjustment portion but also the additional or second phase adjustment portion. Thus, a mixture of second harmonics converted in the first, second and additional or third wavelength conversion portions is output from the additional wavelength conversion portion. Further, a second harmonic wavelength-converted in the second wavelength conversion portion is subjected to phase modulation in the first phase adjustment portion, and a second harmonic wavelength-converted in the third wavelength conversion portion is subjected to phase modulation in the second phase adjustment portion. Therefore, each level of these phase modulations can be appropriately adjusted to continuously control the amplitude of the composite second harmonic. Specifically, the intensity of light is derived by raising the amplitude of the light to the second power, and thereby the intensity of a second harmonic output from the light-intensity modulation element can be continuously controlled. Further, the number of second harmonics to be combined is increased to three by additionally providing the second phase modulation portion. This makes it possible to provide enhanced flexibility in phase modulation and facilitate adjusting the amplitude.

In this light-intensity modulation element, the pair of additional or second electrodes may be designed to apply a correction voltage to the additional or second phase adjustment portion according to a light-intensity modulation signal, so as to allow the light-intensity modulation element to output a zero level of light intensity when the light-intensity modulation signal has the lowest level. In this case, when the light-intensity modulation signal has the lowest level, the phase of the fundamental harmonic is modulated in the second phase adjustment portion to allow respective amplitudes of the second harmonics to be completely cancelled, so that the intensity of light output from the light-intensity modulation element has a zero level. The level of this phase modulation is controlled by the correction voltage to be applied to the second phase adjustment portion. That is, the light intensity can be continuously controlled in the range of a zero level to a maximum level to achieve a light-intensity modulation element suitable for a laser exposure unit or a photograph processing apparatus.

According to a second aspect of the present invention, there is provided an intensity-modulated-light generating device comprising the light-intensity modulation element set forth in the first aspect of the present invention, and a laser source for emitting infrared light to the first wavelength conversion portion of the light waveguide.

In the intensity-modulated-light generating device of the present invention, infrared light emitted from the laser source is introduced into the first wavelength conversion portion of the light waveguide in the light-intensity modulation element. Then, a part of the fundamental harmonic or the infrared light is converted to a second harmonic in each of the first and second wavelength conversion portions, and the phase of the remaining fundamental harmonic from the first wavelength conversion portion is modulated in the phase modulation portion. This local phase modulation makes it possible to continuously control the amplitude of the composite second harmonic. Thus, the intensity-modulated-light generating device can modulate infrared light to a second harmonic with light intensity to be controlled in a variable manner, in a compact structure.

The intensity-modulated-light generating device of the present invention may include a fiber grating which connects between the laser source and the light-intensity modulation element. In this case, infrared light emitted from the laser source is introduced into the first wavelength conversion portion of the light waveguide in the light-intensity modulation element through a grating fiber including an optical fiber core formed to have periodic refractive index modulation. Thus, only laser light of a specific wavelength generated from the laser source is stably supplied to the light-intensity modulation element. This allows the light-intensity modulation element to stably output a second harmonic therefrom.

According to a third aspect of the present invention, there is provided a laser exposure unit comprising a laser exposure source consisting of the intensity-modulated-light generating device set forth in the second aspect of the present invention. This laser exposure unit can variably control a laser light output in a compact structure.

According to a fourth aspect of the present invention, there is provided a photograph processing apparatus comprising the laser exposure unit set forth in the third aspect of the present invention. In this photograph processing apparatus, the pair of electrodes are designed to apply a voltage to the phase adjustment portion according to a light-intensity modulation signal sent thereto in proportion to a density level of image data so as to modulate the intensity of laser light to be output from the laser exposure unit, and the image data is exposed by guiding the laser light output from the laser exposure unit to a photosensitive material. This photograph processing apparatus can variably control a laser light output in a compact structure.

### BRIEF DESCRIPTION OF DRAWINGS

FIG. 1 is a perspective external view of a photograph processing apparatus having an intensity-modulated-light generating device according to one embodiment of the present invention.
FIG. 2 is a perspective view showing the internal structure of a laser exposure unit comprising the intensity-modulated-light generating device.
FIG. 3A is a schematic diagram showing a light-intensity modulation element according to one embodiment of the present invention.
FIG. 3B is a vertical sectional view showing a plurality of polarization structures in the light-intensity modulation element illustrated in FIG. 3A.
FIG. 4 is a schematic diagram showing a relationship between respective phases of second harmonics (SHs) in the light-intensity modulation element illustrated in FIG. 3A.
FIG. 5 is a schematic diagram showing a light-intensity modulation element having a correction section, according to another embodiment of the present invention.
FIG. 6 is a schematic diagram showing a relationship between respective phases of SHs in the light-intensity modulation element illustrated in FIG. 5.
FIG. 7 is a schematic diagram showing an intensity-modulated-light generating device according to another embodiment of the present invention, wherein a semiconductor laser is connected directly to a light-intensity modulation element with a fiber Bragg grating.
FIG. 8 is a schematic diagram showing a light-intensity modulation element with a correction section, according to another embodiment of the present invention.
FIG. 9 is a graph showing a relationship between a voltage V₁ and an output of a second harmonic generation (SHG) element in an intensity-modulated-light generating device according to another embodiment of the present invention.

### DETAILED DESCRIPTION OF THE PREFERRED EMBODIMENTS

With reference to the drawings, an embodiment of the present invention will now be described.

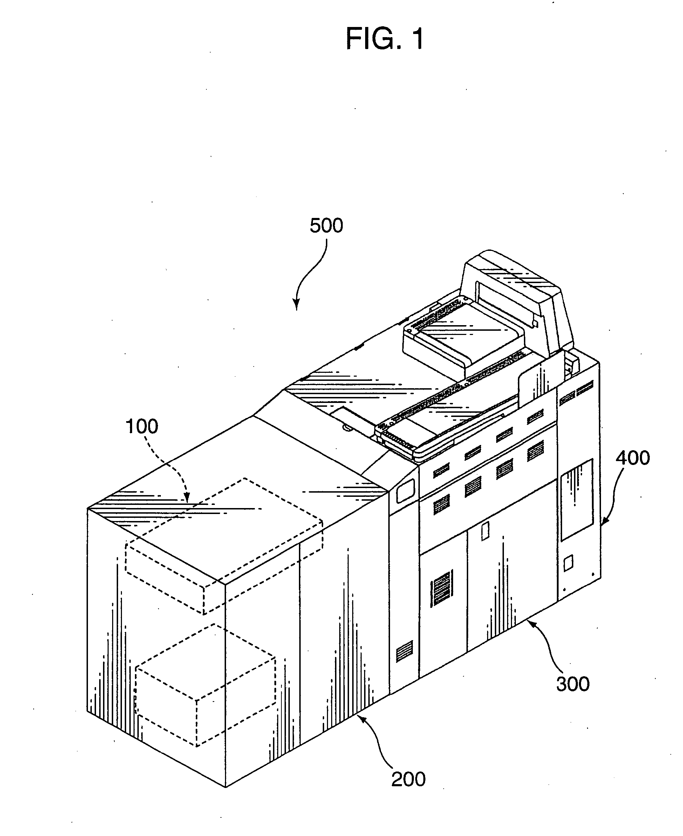

FIG. 1 is a perspective external view of a photograph processing apparatus according to one embodiment of the present invention. The photograph processing apparatus 500 comprises: a laser exposure unit 100 for exposing onto a photosensitive material (photographic paper) image data read from a film (negative or positive film) by an image scanner, image data taken by a digital camera, or image data prepared by a personal computer; a photosensitive-material storage section 200 for storing a roll of photographic paper in a manner that can be fed toward the laser exposure unit 100; a development section 300 for developing, bleaching/fixing and stabilizing an exposed photographic paper; a drying section 400 for drying a stabilized photographic paper; and a photographic-paper feeding system (not shown) extending between these components.

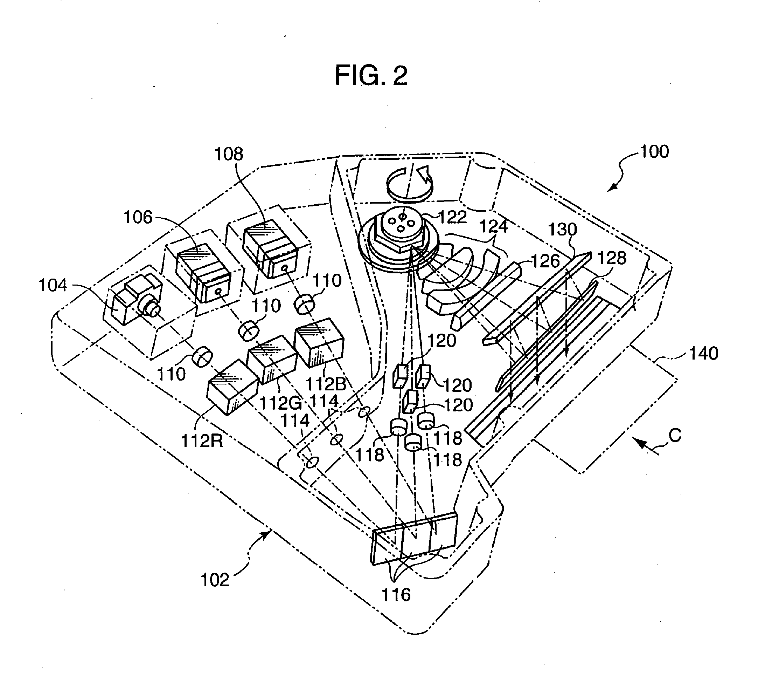

FIG. 2 is a perspective view showing the internal structure of the laser exposure unit 100. While FIG. 2 illustrates a housing 102 without showing an upper portion thereof, the housing 102 is actually formed as a darkroom structure, and hermetically sealed to prevent dusts from getting therein. Three laser sources 104, 106, 108 each adapted to emit beam-shaped laser light are disposed at given positions in the housing 102. The laser source 104 is a semiconductor laser element (LD) adapted to generate red (R) laser light, for example, with a wavelength of 685 nm. The laser sources 106, 108 are semiconductor laser elements adapted to generate laser lights, for example, with wavelengths of 1064 nm and 946 nm, respectively.

Three collimator lenses 110 are disposed, respectively, on the laser-output sides of the laser sources 104, 106, 108 to parallelize or collimate laser light emitted therefrom. Further, an acousto-optic modulator (AOM) 112R is provided to serve as a red (R) light-intensity modulation element. In the similar way, two light-intensity modulators 112G, 112B are provided to serve as green (G) and blue (B) light-intensity modulation elements, respectively.

Further, three laser shaping apertures 114 are disposed, respectively on the laser-output sides of the laser sources 104, 106, 108, and followed by a mirror 116. Then, three spherical lenses 118, three cylindrical lenses 120 and a polygon mirror 120 are disposed on the reflection side of the mirror 116 in this order.

A plurality of fθ lenses 124, a cylindrical lens 126 and two mirrors 128, 130 are disposed on the reflection side of the polygon mirror 122. A photographic paper 140 fed from the arrowed direction C is irradiated with the R, G and B laser lights reflected by the mirror 130 to expose/print image thereonto.

The AOM 112R includes an acousto-optic medium capable of inducing diffraction in incoming laser light by the action of an acousto-optic effect to modulate an output intensity. The AOM 112R is disposed at a given position to align the position of the acousto-optic medium on the optical axis of laser light from the laser source 104, and connected to an AOM driver (not shown).

The light-intensity modulators 112G, 112B are adapted to modulate output intensities of G and B lights, respectively. Each of the light-intensity modulators 112G, 112B is disposed at a given position in the housing 102, and connected to a driver (not shown).

Each of the light-intensity modulators 112G, 112B is operable, in response to receiving laser light emitted from the corresponding laser source 106, 108, to modulate the wavelength of the received laser light into half. This outgoing laser light with the halved wavelength is referred to as "second harmonic (SH)", and a process of generating a second harmonic is referred to as "second harmonic generation (SHG)".

Light emitted from each of the laser sources 106, 108 is not entirely converted to a SH (second harmonic) in the corresponding light-intensity modulator 112G, 112B, but outgoing light from the light-intensity modulator 112G, 112B is a mixture of infrared light and SH. Thus, an infrared (IR) cutoff filter (not shown) is provided to remove the infrared light from the outgoing light from the light-intensity modulator 112G, 112B.

In the above laser exposure unit 100, given that target image data (R density data) is entered from an image memory (not shown) into the AOM 112R through the AOM driver. The intensity of laser light introduced into the AOM 112R is modulated in proportion to a density level of the image data according to a light-intensity modulation signal. During this process, an acousto-optic effect proportional to an output of the AOM driver is induced in the acousto-optic medium of the AOM 112R, and a diffraction effect is caused by the acousto-optic effect. In this way, the intensity of the incoming laser light in the AOM 112R will be modulated in proportion to the density level of the image data.

In contrast, the intensity modulation for the laser sources 106, 108 serving as G and B light sources is performed using no AOM. Instead of using an AOM, each of the light-intensity modulators 112G, 112B is designed to perform intensity modulation therewithin during generation of a second harmonic. In a process for the G and B lights, when target image data (each of G and B density data) is entered from an image memory (not shown) into each of the light-intensity modulators 112G, 112B from the driver, the intensity of laser light introduced into each of the light-intensity modulators 112G, 112B is modulated in proportion to a density level of the image data according to a light-intensity modulation signal, as with the process for the R light.

An operation of the above laser exposure unit will be described below. Laser light emitted from each of the laser sources 104, 106, 108 is introduced into the corresponding one of the AOM 112R and the light-intensity modulators 112G, 112B through the corresponding one of the collimator lenses 110. In response to receiving each signal representing R, G and B density data or the image data, each of the AOM 112R and the light-intensity modulators 112G, 112B modulate laser light introduced thereinto to have an intensity proportional to the image density, and outputs the modulated laser light. The laser light output from each of the AOM 112R and the light-intensity modulators 112G, 112B is scanned in a main scanning direction by the polygon mirror 122 rotated at a constant speed in the arrowed direction, and then emitted onto the photographic paper 140. The photographic paper 140 is transferred in the arrowed direction C orthogonal to the main scanning direction by the photographic-paper feeding system (not shown). In this manner, a 2-dimensional color image is formed on the photographic paper 140.

The present invention relates to a light-intensity modulation element 112G, 112B for modulating the intensity of laser light; an intensity-modulated-light generating device provided with a semiconductor laser 106, 108 and the light-intensity modulation element 112G, 112B and adapted to modulate the intensity of laser light; and a laser exposure unit 100 provided with the intensity-modulated-light generating device as an exposure laser source and adapted to expose/print an image onto a photographic paper by means of intensity-modulated laser light. The present invention also relates to a photographic processing apparatus 500 equipped with the laser exposure unit 100 and adapted to expose/print an image onto a photographic paper by means of intensity-modulated laser light, feed a photographic paper, and develop the exposed photographic paper.

With reference to the drawings, the light-intensity modulation element 112G, 112B of the laser exposure unit 100 illustrated in FIG. 2, and an intensity-modulated-light generating device including the laser source 106, 108 and the light-intensity modulation element 112G, 112B will be described below.

### [First Embodiment]

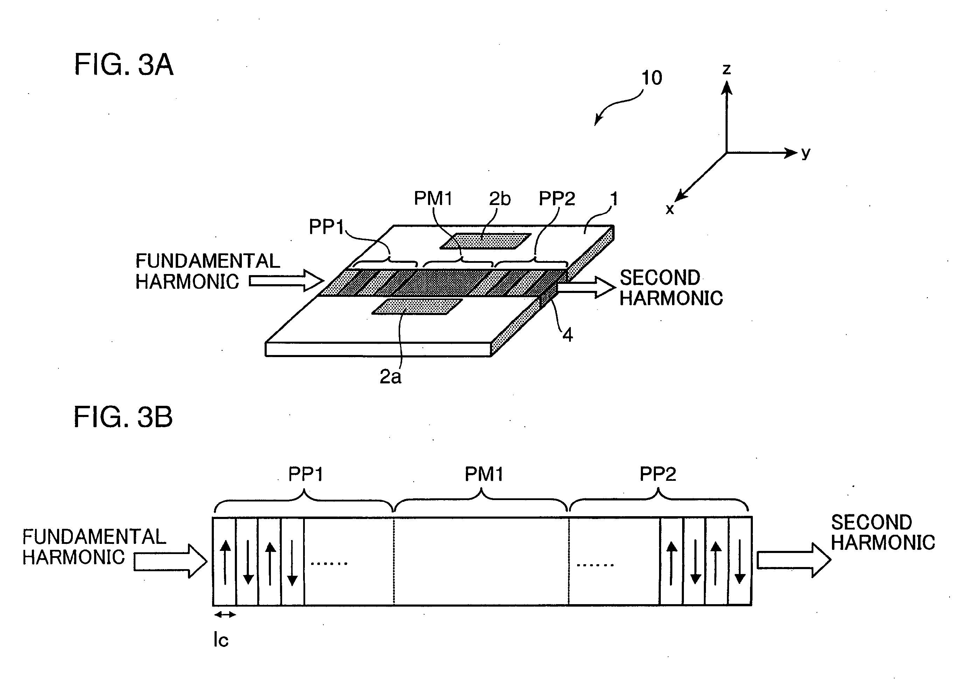

FIG. 3A is a schematic diagram showing a light-intensity modulation element according to a first embodiment of the present invention. FIG. 3B is a vertical sectional view showing a plurality of polarization structures in the light-intensity modulation element, which is a section of the center of a light waveguide in FIG. 3A along the longitudinal direction of the light waveguide.

A light waveguide 4 for guiding laser light is linearly formed in an approximately central region of a rectangular substrate 1. The substrate 1 is formed with a pair of phase modulation electrodes 2a, 2b on opposite sides of the light waveguide 4.

The substrate 1 is made of LiNbO₃ (LN: lithium niobate) which is a nonlinear optical crystal. The LiNbO₃ is a ferromagnetic crystal exhibiting a quadratic nonlinear optic effect, and has a property that its refractive index is changed when an electric field is applied thereto. Further, the LiNbOs has a significantly high nonlinearity among nonlinear optical crystals, and can be used for performing wavelength conversion over a wide wavelength range. Thus, the LiNbO₃ is suitably used in the present invention.

The phase modulation electrodes 2a, 2b are formed in a top surface (principal surface) of the substrate 1, and connected to an electric circuit (not shown). The phase modulation electrodes 2a, 2b are designed to apply a voltage in a desired direction and at a desired level to the light waveguide 4 therethrough to generate an electric field so as to control the refractive index of the light waveguide 4. The phase modulation electrodes 2a, 2b may be prepared through a process for forming a metal thin film on a surface of a crystal in the form of an electrode layer, based on thin-film forming techniques, such as sputtering.

The light waveguide 4 is provided as a means to transmit the after-mentioned laser light therethrough, and linearly formed in the substrate 1. This light waveguide 4 is prepared, for example, through a proton exchange process. The proton exchange process comprises forming a mask in a region of a substrate other than a light waveguide region using a lithography technique, subjecting the substrate to a proton exchange treatment in benzoic acid, removing the mask, and subjecting the substrate to a heat treatment to form a light waveguide.

The light waveguide 4 is formed with a plurality of polarization structures serially disposed in the longitudinal direction of the light waveguide 4 (hereinafter referred to as "light waveguide direction") in such a manner that their polarities in the thickness direction of the substrate 1 are inverted alternately in the light waveguide direction. That is, as shown in FIG. 3B, two periodic polarization inversion portions having periodically inverted polarizations and a non-polarization portion are serially formed at given positions of the light waveguide 4 in a direction of propagation or transmission of laser light as incoming light. The periodic polarization inversion portions will hereinafter be referred to, respectively, as "PP1 region" and "PP2 region" in turn from the incident side of laser light as a fundamental harmonic, and the non-polarization portion will hereinafter be referred to as "PM1 region".

Each of the periodic polarization inversion portions plays a role in converting the wavelength of incoming light. That is, each of the periodic polarization inversion portions serves as a wavelength conversion portion, and the PP1 and PP2 regions corresponds to first and second wavelength conversion portions, respectively.

As mentioned later, the non-polarization portion serves as a phase adjustment portion for modulating the phase of the incoming light, and the PM1 region corresponds to a first phase adjustment portion.

As shown in FIG. 3B, each of the PP1 and PP2 regions are divided into a plurality of smaller regions. Each of these small regions defines one polarization structure, and a polarization direction in the polarization structure is indicated by the arrow marked therein.

For example, in the PP1 region illustrated in FIG. 3B, the polarization directions are the upward direction, the downward direction, the upward direction, - -, in turn from the incident side of a fundamental harmonic. Each of the periodic polarization inversion portions (wavelength conversion portions) has a length set at an integral multiple of a length of the polarization structure in the light waveguide direction. This setting is intended to prevent the occurrence of unnecessary mutual cancellation between amplitudes of second harmonics converted through the polarization structures to be cased when the second harmonics are output from the periodic polarization inversion portions. This makes it possible to obtain a high-intensity second harmonic and achieve enhanced conversion efficiency.

A fundamental harmonic and a second harmonic are naturally different in wavelength, and thereby different in speed (relative speed) of transmission through a medium. If the fundamental and second harmonics have a phase lag therebetween, they will be mutually cancelled to cause a difficulty in obtaining a high second harmonic output. Thus, in view of effective wavelength conversion, it is important to match the phase of the fundamental harmonic with the phase of the second harmonic (phase matching). A quasi-phase matching (QPM) technique may be used for the periodic polarization inversion to perform the wavelength conversion with enhanced efficiency as compared to a bulk type. The length of the polarization structure in the light waveguide direction is also called "coherence length (1c)". The intensity of a composite second harmonic is reduced when light is transmitted beyond this length, and repeatedly increased/reduced in a period corresponding to this length. Thus, the quasi-phase matching technique is intended to periodically inverse a polarization direction by the coherence length, so as to increase the amplitude of a second harmonic without cancellation.

That is, it is preferable that each length 1c of the polarization structures in the light waveguide direction is set at a value allowing a composite amplitude component of a converted second harmonic to be maximized. According to such polarization structures, when light is successively transmitted through the plurality of polarization structures, second harmonics are added together in such a manner that the amplitude thereof is increased, to obtain a high-intensity second harmonic. In addition, an unnecessary cancellation between the amplitudes of second harmonics can be avoided to achieve enhanced conversion efficiency.

The periodic polarization inversion in the light waveguide 4 may be achieved by forming a plurality of periodical electrodes on a surface of the LiNbO₃ substrate except for the polarization inversion region using a lithography technique, and applying a high voltage to the polarization structures through the electrodes.

The above periodically polarization-inversed LiNbO₃ is called "PPLN". The PPLN has an advantage of being able to achieve enhanced wavelength conversion efficiency and generate high-power visible light.

Laser light as a fundamental harmonic is introduced into the above light-intensity modulation element 10 from the left side in FIG. 3A. This laser light is emitted from a semiconductor laser (not shown), such as AlGaAs laser or InGaAsP laser, and has a given wavelength. In this embodiment, the wavelength is in the infrared region, specifically 1064 nm or 946 nm. Laser light maintained in the state just after being emitted from the semiconductor laser will hereinafter be referred to as "fundamental harmonic". The laser light introduced into the light-intensity modulation element 10 from one end thereof is transmitted through the light waveguide 4 in the light-intensity modulation element 10, and output from the other end.

A principle of light-intensity modulation in the light-intensity modulation element 10 will be described below. Firstly, in FIG. 3A, laser light as a fundamental harmonic is introduced from the left end of the light-intensity modulation element 10. The transmission direction (equal to the longitudinal direction of the light waveguide 4) of the fundamental harmonic is defined as a positive direction of a y-axis. Further, a direction perpendicular to the y-axis and along the top surface of the light-intensity modulation element 10 is defined as an x-axis, and a upward direction perpendicular to the top surface (principal surface) of the light-intensity modulation element 10 is defined as a z-axis.

The fundamental harmonic is firstly transmitted through the periodic polarization inversion portion (PP1 region) in the light waveguide 4. During this process, the inversion periodicity in the PP1 region is preset to allow the wavelength of outgoing laser light to have one half of the wavelength of the fundamental harmonic, or to be converted to a second harmonic (SH).

Specifically, when laser light in the infrared region (or infrared laser light) as a fundamental harmonic with a wavelength of 1064 nm is transmitted through the PP1 region, a part of the fundamental harmonic is converted to green laser light with a wavelength of 532 or one half of the wavelength thereof. Further, when infrared laser light as a fundamental harmonic with a wavelength of 946 nm is transmitted through the PP1 region, a part of the fundamental harmonic is converted to blue laser light with a wavelength of 473 or one half of the wavelength thereof. Conversely, laser light in visible green or blue region can be obtained by using infrared laser light with a doubled wavelength relative to the output wavelength, as a fundamental harmonic.

Each length of the polarization structures in the light waveguide direction is determined based on a wavelength of laser light (infrared light) as a fundamental harmonic, and a refractive index of a nonlinear optical material used as the substrate. While a detailed description will be omitted, each length of the polarization structures (1c in FIG. 3B) is, for example, 3.2 µm for a fundamental harmonic with a wavelength of 1064 nm, or 2.3 µm for a fundamental harmonic with a wavelength of 946 nm. Thus, if it is necessary to obtain green laser light, the wavelength of a fundamental harmonic and the length of the polarization structure may be set, respectively, at 1064 nm and 3.2 µm. In the same way, if it is necessary to obtain blue laser light, the wavelength of a fundamental harmonic and the length of the polarization structure may be set, respectively, at 946 nm and 2.3 µm. This length is set for the polarization structure as a minimum unit having either one of the upward and downward polarization directions. Therefore, a length of the polarization structures for one period consisting of the upward and downward polarization directions will be a doubled value to the above length.

The following description will be made on the assumption that infrared laser light as a fundamental harmonic with a wavelength of 946 nm is introduced into the light waveguide 4. It is to be understood that the same description may be applied to infrared laser light as a fundamental harmonic with a wavelength of 1064 nm.

Laser light just after being transmitted through the PP1 region is infrared light as a fundamental harmonic with a wavelength of 946 nm in large part, and only a part of the laser light is converted to blue light with a wavelength of 473 nm. This laser light consisting of a mixture of infrared and blue lights is introduced into the non-polarization portion (PM1 region). During this process, a given voltage is applied between the phase modulation electrodes 2a, 2b to generate an electric field in the z-axis direction in FIG. 3A. The level of the given voltage is controlled by a light-intensity modulation signal representing the level of a light intensity to be modulated in proportion to a density level of image gate.

Specifically, according to light-intensity modulation signal, the a voltage is supplied to the first phase adjustment portion in proportion to a density level of image data, for example, taken by a digital camera. Thus, the intensity of the laser light introduced into the light-intensity modulation element 10 is modulated in proportion to the density level of the image data. As mentioned above, the LiNbO₃ is a material having a refractive index to be changed when an electric field is applied thereto. The LiNbO₃ also has a characteristic that the change in refractive index is varied depending on the direction of an electric field to be applied thereto. Based on these characteristics, the phase modulation is performed by applying an appropriate voltage from the electrodes 2a, 2b to the light waveguide 4, for example, so as to control a transmissivity of the z-axis directional component.

While both phases of the infrared and blue lights are modulated when the lights are transmitted through the PM1 region, the level of modulation is different therebetween. Further, if the polarity of a voltage to be applied to the phase modulation electrodes 2a, 2b is reversed, a direction (positive or negative) of the phase change will also be reversed.

Then, the infrared and blue laser lights phase-modulated in the PM1 region are transmitted through the periodic polarization inversion portion (PP2 region). During this process, as with the PP1 region, the inversion periodicity in the PP2 region is preset to allow infrared laser light as a fundamental harmonic with a wavelength of 946 nm to be converted to blue light with a wavelength of 473 nm. Thus, both blue laser lights produced in the PP1 and PP2 regions exist in the PP2 region.

While the two blue lights have the same wavelength, they are different in phase because the fundamental harmonic has been modulated in the PM1 region. Thus, when these lights are combined together in the common region, their light intensities are not simply added but combined in a manner of vector addition. Then, the composite light is output as a SH from the other side of the light-intensity modulation element 10 opposite to the laser-light incident side. Infrared light remaining in the composite light may be removed, for example, by a infrared cutoff filter, to obtain only blue laser light.

In other words, the light-intensity modulation element 10 can modulate the phase of a fundamental harmonic in the PM1 region to control the intensity of laser light in the visible region to be extracted. The phase modulation in the PM1 region is caused by an electric field applied to the PM1 region, and the electric field is induced by a voltage applied between the phase modulation electrodes 2a, 2b. Thus, the light-intensity modulation element 10 according to this embodiment can readily control the intensity of a SH by the applied voltage.

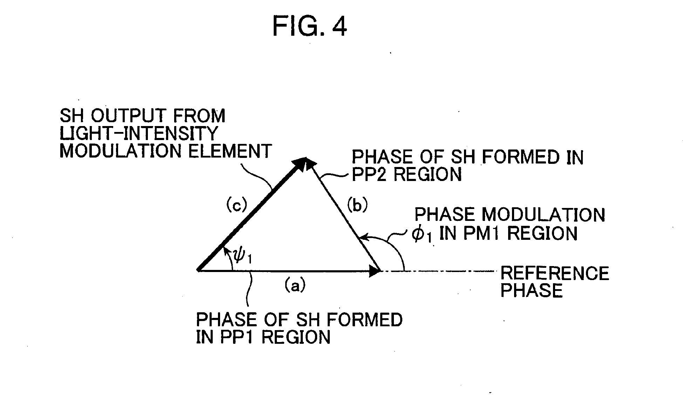

The SH intensity modulation in this embodiment will be described with the focus on changes in phase. FIG. 4 is a schematic diagram showing a relationship between the phases of SHs in the above light-intensity modulation element 10. The following description will be made on the assumption that the phase change of a SH (e.g. blue light) is zero for simplicity, because the phase modulation of the SH is smaller than that of a fundamental harmonic (e.g. light in the infrared region).

A SM is firstly generated in the PP1 region, as described above. In the following discussion, the phase of this SM is used as a reference phase, and indicated by the arrow (a) in FIG. 4. That is, the horizontal line (one-dot chain line) in FIG. 4 is the reference phase. Then, when the fundamental harmonic is transmitted through the PM1 region, the phase of the fundamental harmonic is modulated by a value ϕ₁. In FIG. 4, a direction allowing the phase to be increased is defined as a counterclockwise direction. Thus, the fundamental harmonic after being transmitted through the PM1 region has a phase rotated counterclockwise from the reference phase by the value ϕ₁. Then, when the fundamental harmonic is transmitted through the PP2 region, another SH is generated. This SH generated in the PP2 region has the same phase as that of the fundamental harmonic having the phase modulation ϕ₁ given in the PM1 region. The phase of another SH is indicated by the arrow (b) in FIG. 4.

The phase of the SH generated in the PP1 region is maintained as the arrow (a) in FIG. 4 because the phase modulation of a SH is small when the SH is transmitted through the PM1 region, as described above. Thus, a SH output from the light-intensity modulation element 10 has a phase obtained by combining the SH (arrow (a)) generated in the PP1 region with the SH (arrow (b)) generated in the PP2 region. That is, the result (arrow (c)) of the vector addition of the arrows (a) and (b) is the phase of the output SH from the light-intensity modulation element 10. In FIG. 4, the output phase is indicated by a value ψ₁.

If the phase modulation level ϕ₁ in the PM1 region is zero, each of the SHs generated in the PP1 and PP2 regions has the same phase. Thus, these SHs act to intensify mutually to allow the SM output from the light-intensity modulation element 10 to be maximized. In contrast, if the phase modulation level ϕ₁ in the PM1 region is n, each of the SHs generated in the PP1 and PP2 regions has an opposite phase. Thus, these SHs act to attenuate mutually to allow the SM output from the light-intensity modulation element 10 to be minimized. In this case, the energy of the SH is returned to the energy of the fundamental harmonic. That is, a zero value of SH output can be obtained by forming an opposite-phase relationship between the SHs generated in the PP1 and PP2 regions and equalizing their light intensities.

As mentioned above, the light-intensity modulation element 10 according to this embodiment is designed to apply a voltage to the light waveguide 4 for transmitting laser light therethrough, so as to modulate the phase of the laser light. Further, the phase modulation of the laser light is equivalent to the intensity modulation of the laser light. Thus, the light-intensity modulation element 10 according to this embodiment can control the intensity of SH to be output therefrom by adjusting the level of a voltage to be applied to the light waveguide 4.

### [Second Embodiment]

The light-intensity modulation element 10 according to the first embodiment is provided with two of the periodic polarization inversion portions and one of the non-polarization portion, and designed to perform the phase modulation, or the intensity modulation of a SH, based on a voltage to be applied to the non-polarization portion. In addition to the structure in the first embodiment, a light-intensity modulation element according to a second embodiment of the present invention comprises one additional periodic polarization inversion portion and one additional non-polarization portion. In the following description, the additional periodic polarization inversion portion and non-polarization portion will be referred to as "correction portion", where necessary.

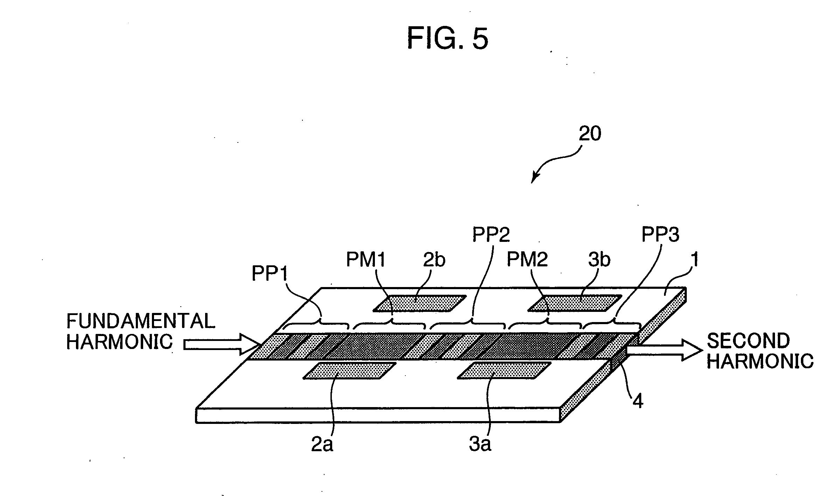

FIG. 5 is a schematic diagram showing the light-intensity modulation element according to the second embodiment. In FIG. 5, functionally/structurally the same component or element as that in the first embodiment is defined by the same reference numeral, and its detailed description will be omitted. Further, coordinate axes are also the same as those in FIG. 3A. That is, an upward direction of a normal line to a top surface (principal surface) of the element is a positive direction of a z-axis, and a transmission direction of a laser light is a positive direction of a y-axis.

As with the first embodiment, a light waveguide 4 for transmitting laser light therethrough is linearly formed in an approximately central region of a rectangular substrate 1. Two pairs of phase modulation electrodes 2a, 2b, 3a, 3b are formed in the substrate 1 on opposite sides of the light waveguide 4. The phase modulation electrodes 3a, 3b are one of additional components in the second embodiment.

The substrate 1 is made of LiNbO₃ (LN: lithium niobate) which is a nonlinear optical crystal. The phase modulation electrodes 2a, 2b, 3a, 3b are designed to apply a desired level of voltage to the light waveguide 4 therethrough so as to control the refractive index of the light waveguide 4.

The three periodic polarization inversion portions formed in the light waveguide 4 will be referred to, respectively, as "PP1 region", "PP2 region" and "PP3 region", and the two non-polarization portions will be referred to, respectively, as "PM1 region" and "PM2 region, in turn from the incident side of laser light as a fundamental harmonic. The PP3 region in the periodic polarization inversion portions and the PM2 region in the non-polarization portions are the additional components in the second embodiment. The PP3 region serves as a third conversion portion, and the PM2 region serves as a second phase modulation portion.

Laser light as a fundamental harmonic with a given wavelength is introduced into the above light-intensity modulation element 20 from the left side in FIG. 5. As with the first embodiment, given that the wavelength in the second embodiment is in the infrared region, specifically 1064 nm or 946 nm. The laser light introduced into the light-intensity modulation element 20 from one end thereof is transmitted through the light waveguide 4 in the light-intensity modulation element 20, and output from the other end.

The following description will be made on the assumption that infrared laser light as a fundamental harmonic with a wavelength of 946 nm is introduced into the light waveguide 4.

Firstly, the fundamental harmonic introduced into the light-intensity modulation clement 20 is transmitted through the periodic polarization inversion portion (PP1 region) in the light waveguide 4. During this process, the inversion periodicity in the PP1 region is preset to allow the wavelength of outgoing laser light to be converted to one half of the wavelength of the fundamental harmonic. Thus, laser light just after being transmitted through the PP1. region is infrared light as a fundamental harmonic with a wavelength of 946 nm in large part, and only a part of the laser light is converted to blue light with a wavelength of 473 nm. This laser light consisting of a mixture of infrared and blue lights is introduced into the non-polarization portion (PM1 region). During this process, a given voltage is applied between the phase modulation electrodes 2a, 2b to generate an electric field in the z-axis direction in FIG. 5. The level of the given voltage is controlled by a light-intensity modulation signal representing the level of a light intensity to be modulated in proportion to a density level of image gate. Thus, the intensity of the laser light is modulated during transmission through the PM1 region.

Then, the infrared and blue laser lights phase-modulated in the PM1 region are transmitted through the periodic polarization inversion portion (PP2 region). During this process, as with the PP1 region, the inversion periodicity in the PP2 region is preset to allow infrared laser light as a fundamental harmonic with a wavelength of 946 nm to be converted to blue light with a wavelength of 473 nm. Thus, both blue laser lights produced in the PP1 and PP2 regions exist in the PP2 region. While the two blue lights have the same wavelength, they are different in phase because the fundamental harmonic has been modulated in the PM1 region.

Then, the laser light consisting of the mixture of the infrared and blue lights is introduced into the non-polarization portion (PM2 region). During this process, a given voltage is applied between the phase modulation electrodes 3a, 3b to generate an electric field in the z-axis direction in FIG. 5. The level of the given voltage is controlled by a light-intensity modulation signal representing the level of a light intensity to be modulated in proportion to a density level of image gate. Thus, the intensity of the laser light is modulated during transmission through the PM2 region.

Then, the infrared and blue laser lights phase-modulated in the PM2 region are transmitted through the periodic polarization inversion portion (PP3 region). During this process, as with the PP1 and PP2 regions, the inversion periodicity in the PP3 region is preset to allow infrared laser light as a fundamental harmonic with a wavelength of 946 nm to be converted to blue light with a wavelength of 473 nm. Thus, three types of blue laser lights produced in the PP1, PP2 and PP3 regions exist in the PP3 region. While the three blue lights have the same wavelength, they are different in phase because the fundamental harmonic has been modulated in the PM1 or PM2 region. Therefore, light obtained by the vector addition of these three blue laser lights is output as a SH from the other side of the light-intensity modulation element 20 opposite to the laser-light incident side.

In other words, the light-intensity modulation element 20 according to the second embodiment can modulate the phase of a fundamental harmonic in the PM1 and PM2 regions to control the intensity of laser light in the visible region to be extracted. The phase modulations in the PM1 and PM2 regions are induced by each voltage applied between the phase modulation electrodes 2a, 2b and between phase modulation electrodes 3a, 3b. Thus, the light-intensity modulation element 20 according to the second embodiment can readily control the intensity of a SH by the applied voltage.

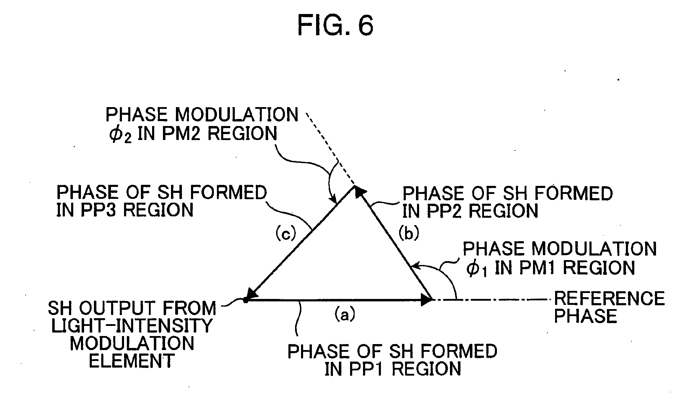

The SH intensity modulation in the second embodiment will be described with the focus on changes in phase. FIG. 6 is a schematic diagram showing a relationship between the phases of SHs in the above light-intensity modulation element 20. The following description will be made on the assumption that the phase change of a SH (e.g. blue light) is zero for simplicity, because the phase modulation of the SH is smaller than that of a fundamental harmonic (e.g. light in the infrared region).

A SM is firstly generated in the PP1 region, as described above. In the following discussion, the phase of this SM is used as a reference phase, and indicated by the arrow (a) in FIG. 6. That is, the horizontal line (one-dot chain line) in FIG. 6 is the reference phase. Then, when the fundamental harmonic is transmitted through the PM1 region, the phase of the fundamental harmonic is modulated by a value ϕ₁. In FIG. 6, a direction allowing the phase to be increased is defined as a counterclockwise direction. Thus, the fundamental harmonic after being transmitted through the PM1 region has a phase rotated counterclockwise from the reference phase by the value ϕ₁. Then, when the fundamental harmonic is transmitted through the PP2 region, another SH is generated. This SH generated in the PP2 region has the same phase as that of the fundamental harmonic having the phase modulation ϕ₁ given in the PM1 region. The phase of another SH is indicated by the arrow (b) in FIG. 6.

The fundamental harmonic having the value ϕ₁ of phase modulation given in the PM1 region additionally has a value ϕ₂ of phase modulation during transmission through the PM2 region. That is, the fundamental harmonic has a total ϕ₁ + ϕ₂ of phase modulation relative to the reference phase. Thus, the fundamental harmonic just after being transmitted through the PM2 region has a phase rotated counterclockwise from the reference phase by the value ϕ₁ + ϕ₂. Then, when the fundamental harmonic is transmitted through the PP3 region, another SH is generated. This SH generated in the PP3 region has the same phase as that of the fundamental harmonic as the basis thereof. The phase of another SH is indicated by the arrow (c) in FIG. 6.

The phase of the SH generated in the PP1 region is maintained as the arrow (a) in FIG. 6 because the phase modulation of a SH is small when the SH is transmitted through the PM1 region, as described above. Thus, a SH output from the light-intensity modulation element 20 has a phase obtained by adding the SH (arrow (a)) generated in the PP1 region, the SH (arrow (b)) generated in the PP2 region, and the SH (arrow (c)) generated in the PP3 region. That is, the result of the vector addition of the arrows (a), (b) and (c) is the phase of the output SH from the light-intensity modulation element 20.

FIG. 6 illustrates that the result of the composition of the arrows (a), (b) and (c) becomes zero. This means that the SH output from the light-intensity modulation element 20 is zero. The result of the composition of three vectors is not always zero. However, if the respective lengths of the three vectors satisfy the condition for forming a triangle (the length of one side is less than the sum of the lengths of other two sides), a combination of ϕ₁ and ϕ₂ capable of making the composition result zero unexceptionally exists. Conversely, a voltage to be applied to the PM1 and PM2 regions can be controlled to allow the composition result to be zero or provide a zero value of SH to be output from the light-intensity modulation element 20.

For example, when the light-intensity modulation signal has the lowest level or when it is required to minimize an output of blue or green SH in the second embodiment, a correction voltage allowing a light intensity output to be a zero level may be supplied to the PM2 region added as a correction portion.

As mentioned above, the light-intensity modulation element 20 according to the second embodiment comprises one additional periodic polarization inversion portion and one additional non-polarization portion, in addition to the structure in the first embodiment. Thus, the light-intensity modulation element 20 makes it possible to control the level of a voltage to be applied to the light waveguide 4 to adjust the intensity of SH to be output therefrom, and to readily provide a zero value of SH to be output therefrom.

### [Third Embodiment]

Each of the light-intensity modulation elements 10, 20 according to the first and second embodiments is provided with two or three of the periodic polarization inversion portions and one or two of the non-polarization portions, and designed to perform the phase modulation, or the intensity modulation of a SH, based on a voltage to be applied to the non-polarization portions. An intensity-modulated-light generating device according to a third embodiment of the present invention comprises the laser source 106 (or 108) and the light-intensity modulation element 10 or 20. This intensity-modulated-light generating device has a combinational function of the laser source 106 (or 108), the collimator lens 110 and the light-intensity modulator 112G (or 112B) in the laser exposure unit illustrated in FIG. 2.

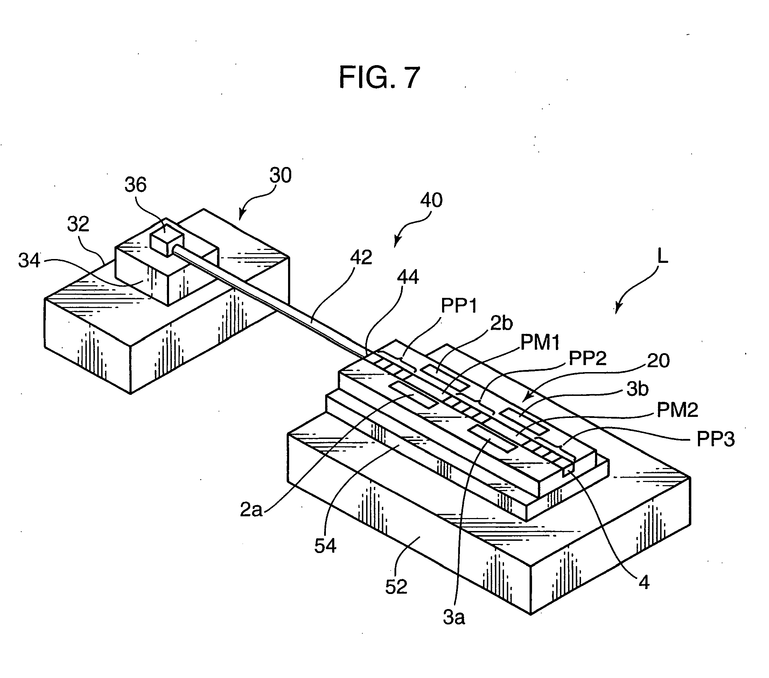

FIG. 7 is a perspective view showing the intensity-modulated-light generating device L according to third embodiment. The intensity-modulated-light generating device L comprises a laser generation section 30 having a semiconductor laser 36, and a light-intensity modulation element 20 for converting laser light generated from the laser generation section 30 to have a given intensity, and outputting the intensity-modulated laser light. The laser generation section 30 is connected to the light-intensity modulation element 20 through a connection section 40.

The laser generation section 30 includes the semiconductor laser 36 for generating laser light with a given wavelength, a support member 34 supporting the semiconductor laser 36, and an approximately rectangular parallelepiped-shaped base member 32 fixedly mounting the support member 34. The semiconductor laser 36 is typically contained in a metal housing (not shown), and the base member 32 is attached onto a bottom surface of the housing. The base member 32 is provided as a means to adjust a temperature of the semiconductor laser 36 so as to stabilize an output wavelength of laser light to be generated therefrom, and composed, for example, a Peltier element.

For example, the semiconductor laser 36 to be used may be an AlGaAs laser or InGaAsP laser having a double-heterostructure and/or a quantum well structure. As an oscillation wavelength of the semiconductor laser 36, when a second harmonic is converted by the light-intensity modulation element 20, a semiconductor laser capable of generating infrared laser light with a wavelength of 1064 nm is selected, for example, to obtain green laser light with a wavelength of 532 nm, and a semiconductor laser capable of generating infrared laser light with a wavelength of 946 nm is selected, for example, to obtain blue laser light with a wavelength of 473 nm. Preferably, the semiconductor laser 36 is in the form of a semiconductor chip adapted to output infrared light.

The light-intensity modulation element 20 is prepared by forming a light waveguide 4 for transmitting laser light therethrough, in a nonlinear optical crystal periodically formed with polarization inversion layers. The light-intensity modulation element 20 is mounted on a support member 54, and further held by an approximately rectangular parallelepiped-shaped base member 52 composed, for example, a Peltier element, to adjust a temperature of the light-intensity modulation element 20.

Laser light generated from the laser generation section 30 is guided to the light-intensity modulation element 20 through an optical fiber 42. Specifically, the optical fiber 42 has one end optically connected to an emission portion of the semiconductor laser 36, and the other end optically connected to an entrance portion 44 of the light waveguide 4 formed in the light-intensity modulation element 20. While the optical fiber 42 to be used may be a typical optical fiber, a grating fiber is preferably used therefor. The grating fiber has an optical fiber core formed to have periodic refractive index modulation. The grating fiber is adapted to reflect only light with a specific wavelength or serve as a sort of resonator mirror so as to resonate the light with the specific wavelength to enhance the intensity of the light, and then output the light.

This grating fiber is preferably used as the optical fiber connecting between the laser generation section 30 and the light-intensity modulation element 20, to allow only laser light generated from the semiconductor laser with a specific wavelength, for example, of 1064 nm or 946 nm, to be stable output at a high intensity obtained by the resonance effect, while outputting laser light with a wavelength other than the specific wavelength directly without receiving the resonance effect, so as to achieve a stable laser output in the semiconductor laser 36. Thus, the use of the fiber grating makes it possible to prevent light with a different wavelength from the oscillation wavelength from retuning to the semiconductor laser 36 so as to stabilize the laser oscillation. Generally, the fiber grating may be produced by irradiating a silica-based single-mode fiber with excimer-laser ultraviolet light.

With reference to FIG. 7, an operation of the intensity-modulated-light generating device L will be described below. When a driving current is applied from a driving circuit (not shown) to the semiconductor laser 36, the semiconductor laser 36 generates laser light with a given wavelength (e.g. 1064 nm). While this process involves heat generation in the semiconductor laser 36, a temperature of the semiconductor laser 36 can be adjusted at a constant value by the base member composed, for example, of a Peltier element, to stabilize the output wavelength.

The laser light generated from the semiconductor laser 36 is introduced into one end of the optical fiber 46 using an optical lens system, and guided to an incident-side end (entrance portion 44) of the light waveguide 4 in the light-intensity modulation element 20 through the optical fiber 42. The optical fiber 42 is connected with the incident-side end of the light waveguide 4, for example, using a UV cure adhesive transparent to light. Then, the laser light is subjected to wavelength conversion according to the periodicity of the polarization inversion layers (PP1, PP2 and PP3 regions) in the light-intensity modulation element 20. For example, if the periodicity of polarization inversion is preset to allow a second harmonic to be generated, and laser light with a wavelength of 1064 nm is introduced from the semiconductor laser 36, the laser light will be converted to green laser light with a wavelength of 532 nm or 1/2 of the original wavelength during transmission through the light waveguide 4. If the incident laser light has a wavelength of 946 nm, it will be converted to blue laser light with a wavelength of 472 nm or 1/2 of the original wavelength.

As mentioned above, the intensity-modulated-light generating device according to the third embodiment can readily modulate a light intensity according to an applied voltage in a compact structure as compared to the AOM as a conventional light-intensity modulation element. Thus, a laser exposure unit incorporating the intensity-modulated-light generating device according to the third embodiment can be further downsized.

### [Fourth Embodiment]

A light-intensity modulation element according to a fourth embodiment of the present invention will be described below.

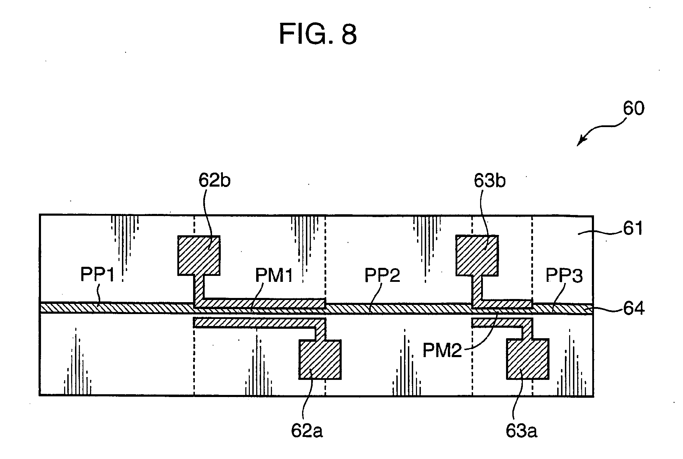

FIG. 8 is a schematic diagram showing the light-intensity modulation element a correction section according to the fourth embodiment. In the light-intensity modulation element 60, a light waveguide 64 for transmitting laser light therethrough is linearly formed in an approximately central region of a rectangular substrate 61. Two pairs of phase modulation electrode pads 62a, 62b, 63a, 63b are disposed on opposite sides of the light waveguide 4.

The substrate 61 is made of LiNbO₃ (LN: lithium niobate) which is a nonlinear optical crystal. In the fourth embodiment, the substrate 61 has a size of 15.4839 mm in a laser-light transmission direction (horizontal direction in FIG. 8 or the longitudinal direction of the substrate), and a size of 3.0 mm in a direction perpendicular to the laser-light transmission direction (vertical direction in FIG. 8).

The light waveguide 64 is provided as a means to transmit laser light therethrough, and linearly formed in the substrate 61. This light waveguide 64 is prepared through the aforementioned proton exchange process, and the width of the light waveguide 64 is about 5 µm. The light waveguide 64 is alternately formed with three periodic polarization inversion portions and two non-polarization portions. The periodic polarization inversion portions will hereinafter be referred to, respectively, as "PP1 region", "PP2 region" and "PP3 region", and the non-polarization portions will hereinafter be referred to, respectively, as "PM1 region" and "PM2 region", in turn from the incident side of laser light as a fundamental harmonic. The lengths (in the horizontal direction in FIG. 8) of the PP1, PM1, PP2, PM2 and PP3 regions are, respectively, 4.9956 mm, 3.4975 mm, 4.9956 mm, 0.997 mm and 0.9982 mm, in this order.

The periodic polarization inversion portions (PP1, PP2 and PP3 regions) are formed through the proton exchange process. Each of the periodic polarization inversion portions has a plurality of polarization structures each having a length of 2.3 µm. That is, the length of the periodic polarization inversion portion is set at an integral multiple of the length of the polarization structure in the light waveguide direction. Specifically, each of the PP1 and PP2 regions has a length of 2172 times of each length (1c in FIG. 3(c)) of the polarization structures, and the PP3 region has a length of 434 times of each length of the polarization structures.

Each of the phase modulation electrode pads 62a, 62b, 63a, 63b is formed on a top surface (principal surface) of the substrate 61, and connected to an electric circuit (not shown). Among them, each of the phase modulation electrode pads 62a, 63a has a potential of zero V, or serves as a ground (G) electrode. Thus, in the PM1 or PM2 region, a potential of the phase modulation electrode pad 62b or 63b corresponds to a voltage to be applied to the light waveguide 64. That is, a potential of the phase modulation electrode pad 62b corresponds to a voltage (herein after referred to as "V₁") to be applied to the PM1 region, and a potential of the phase modulation electrode pad 63b corresponds to a voltage (herein after referred to as "V₂") to be applied to the PM2 region.

The phase modulation electrode pads 62a, 62b, 63a, 63b are formed through a sputtering process and a lithography technique. Each of the phase modulation electrode pads 62a, 62b, 63a, 63b has a length of 0.5 mm and a width of 0.5 mm. Each of ground-side and positive (+)-side electrode wires extending in a direction perpendicular to the light waveguide 64 (vertical direction in FIG. 8) in the PM1 and PM2 regions, and connected, respectively, to the phase modulation electrode pads 62a, 62b, has a width of 20 µm. The distance between the adjacent electrode wires in the vertical direction in FIG. 8 is also set at 20 µm.

As shown in FIG. 8, in the PM1 and PM2 region in the fourth embodiment, each of the positive-side electrode wires connected to phase modulation electrode pads 62b, 63b is superimposed on an approximately one-half region of the light waveguide 64 in its width directional. Each of the ground-side electrode wires connected to phase modulation electrode pads 62a, 63a is formed at a position spaced apart from the light waveguide 64 by about 20 µm. According to this arrangement, in the PM1 and PM2 regions of the light waveguide 64, an electric field is generated in a direction of a normal line to the top surface (principal surface) of the substrate 61 to change a refractive index of the LiNbO₃ constituting the light waveguide 64.

The above light-intensity modulation element 60 was incorporated into the intensity-modulated-light generating device illustrated in FIG. 7. The laser source 36A was selected to emit laser light with a wavelength of 940 nm. The laser source 36 and the light-intensity modulation element 60 were connected together through the optical fiber 42. In the intensity-modulated-light generating device, light emitted from the laser source 36 is not entirely converted to a SH (second harmonic). Thus, light output from the light-intensity modulation element 60 was passed through an IR (infrared) cutoff filter (not shown) to remove infrared light.

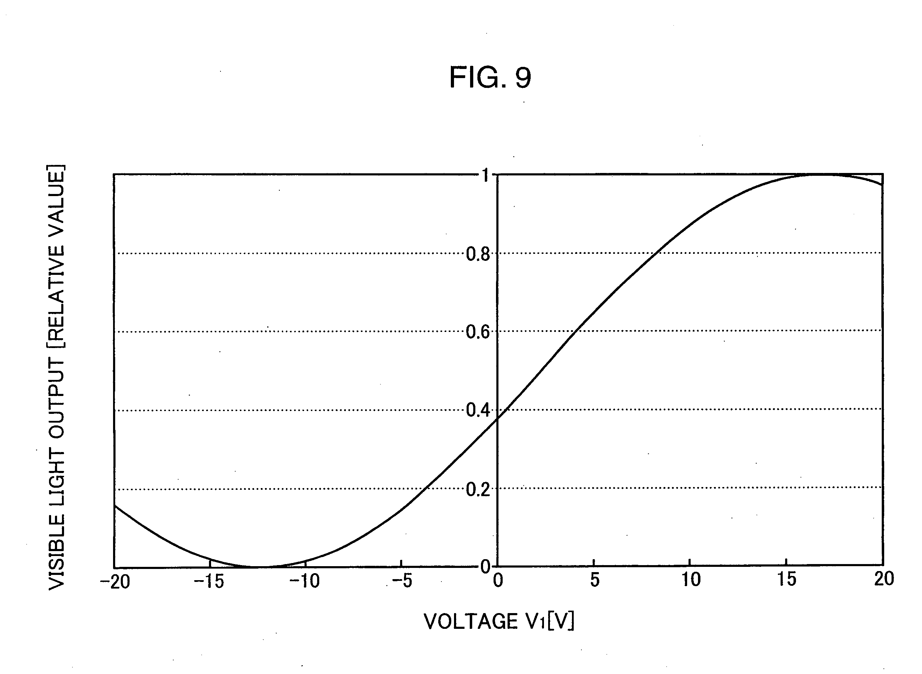

The result of a SHG measurement in the above intensity-modulated-light generating device is shown in FIG. 9. FIG. 9 is a graph showing a relationship between a voltage V₁ and a SH output (visible light output) in the intensity-modulated-light generating device. The horizontal axis represents a voltage to be applied between the phase modulation electrode pads 62a, 62b or a voltage V₁ to be applied to the PM₁ region. When the intensity-modulated-light generating device is incorporated in a laser exposure unit, this voltage V₁ is applied according to a light-intensity modulation signal proportional to a density level of image data. A voltage V₂ to be applied to the PM2 region was fixed at 10 V The vertical axis represents an output of visible light with a wavelength of 470 nm, to be output from the intensity-modulated-light generating device as the result of the SHG, wherein the value of the vertical axis is standardized by a maximum value of the visible light output, or a relative value.

A conventional nonlinear optical material including the LiNbO₃ constituting the substrate 61 has a temperature dependence in efficiency when an incident light is converted to a SH. Thus, it is an important factor in obtaining a high output to maintain the nonlinear optical material at an optimal temperature. During this measurement, the light-intensity modulation element was maintained at a temperature of 55.2°C. This temperature was selected to maximize a visible light output from the intensity-modulated-light generating device.

The obtained visible light output is smoothly changed in response to changes in the voltage V₁. The visible light output becomes approximately zero around V₁ = - 12V The visible light output is increased as the voltage V₁ is increased, and maximized around V₁ = 17V The maximum and minimum outputs are, respectively, 300 µW and 0.3 µW, and thus an extinction ratio is 1/1000.

While the laser source in the fourth embodiment is selected to generate laser light with a wavelength of 940 nm to obtain an output of blue visible light with a wavelength of 470 nm, the present invention is not limited to this laser source. For example, a laser source capable of generating laser light with a wavelength of 1064 nm may be used to obtain an output of green visible light with a wavelength of 532 nm. That is, in intensity-modulated-light generating device according to the fourth embodiment, a laser source is selected to generate laser light with a double wavelength of that of a desired visible light, and a light-intensity modulation element is prepared to have polarization inversion periodicity in conformity to the wavelength. Thus, intensity-modulated-light generating device can be achieved as a SHG laser capable of output modulation in a compact structure.

As mentioned above, the intensity-modulated-light generating device with the light-intensity modulation element according to the fourth embodiment can have an output variable function with a large extinction ratio, and smoothly control a SH output according to an applied voltage. In addition, the intensity-modulated-light generating device has no need for an AOM conventionally used for intensity modulation. Thus, the light-intensity modulation element can be reduced in size in its entirety. As compared to a Mach-Zehnder type, the intensity- modulated-light generating device has an advantage of being able to lower a total loss. Thus, a laser exposure unit incorporating the intensity-modulated-light generating device according to the fourth embodiment, and a photograph processing apparatus equipped with the laser exposure unit can readily achieve an output variable function in a compact structure.

### [Other Embodiment]

While the present invention has been described in connection with the above specific embodiments using a nonlinear optical crystal as the light waveguide 4, the light waveguide may be made of a nonlinear organic polymer.

The electrodes associated with the light-intensity modulation element may have any suitable form capable of applying an electric field to the light waveguide. Thus, the electrodes is not limited to the arrangement where a pair of electrodes (e.g. 2a and 2b in FIG. 3(a)) are disposed on opposite sides of the light waveguide.

In addition to LiNbO₃ (LN), the nonlinear optical crystal may include MgO-doped LiNbO₃ (MgO : LN), LiTaO₃ (LT), KTiOPoO₄ (KTP), RbTiOAsO₄ and RbTiOPO₄.

While the light waveguide in the above embodiments is formed through a proton exchange process, the present invention is not limited to the proton exchange process. For example, the light waveguide may be formed through a Ti diffusion process or a Li diffusion process.

While the light-intensity modulation element in the above embodiments is used as a light source of a laser exposure unit in a photograph processing apparatus, the present invention is not limited to such an application. For example, the light-intensity modulation element may be suitably used as a light source for various apparatuses, such as a color laser printer, a color copying machine and an optical disk unit.

## Claims

1. A light-intensity modulation element comprising:
a substrate made of a nonlinear optical crystal; and
a light waveguide formed in a principal surface of said substrate to extend in one direction, said light waveguide including:
first and second wavelength conversion portions for converting a part of infrared light introduced into said light waveguide to a second harmonic, each of said first and second wavelength conversion portions having a plurality of polarization structures serially disposed in the longitudinal direction of said light waveguide in such a manner that their polarities in the thickness direction of said substrate are inverted periodically and alternately in the longitudinal direction of said light waveguide; and
a phase adjustment portion located between said first and second wavelength conversion portions, and associated with a pair of electrodes disposed in opposed relation to one another on opposite sides thereof.

2. The light-intensity modulation element as defined in claim 1, wherein each of said polarization structures has a length in the longitudinal direction of said light waveguide, said length being determined based on a wavelength of said infrared light.

3. The light-intensity modulation element as defined in claim 1 or 2, wherein each of said polarization structures has a length in the longitudinal direction of said light waveguide, said length being preset to allow a composite amplitude component of said converted second harmonic to be maximized.

4. The light-intensity modulation element as defined in any of claims 1 to 3, wherein each of said first and second wavelength conversion portions has a length in the longitudinal direction of said light waveguide, said length being preset at an integral multiple of a length of each of said polarization structures in the longitudinal direction of said light waveguide.

5. The light-intensity modulation element as defined in any of claims 1 to 4, wherein said pair of electrodes are designed to apply a voltage to said primary phase adjustment portion according to a light-intensity modulation signal sent thereto.

6. The light-intensity modulation element as defined in any of claims 1 to 5, wherein said second harmonic has a wavelength of blue light in the visible region.

7. The light-intensity modulation element as defined in any of claims 1 to 5, wherein said second harmonic has a wavelength of green light in the visible region.

8. The light-intensity modulation element as defined in any of claims 1 to 7, wherein said nonlinear optical crystal is lithium niobate.

9. The light-intensity modulation element as defined in any of claims 1 to 6 and 8, wherein said second harmonic has a wavelength of blue light in the visible region, and each of said polarization structures has a length of 2.3 micrometers in the longitudinal direction of said light waveguide.

10. The light-intensity modulation element as defined in any of claims 1 to 5, 7 and 8, wherein said second harmonic has a wavelength of green light in the visible region, and each of said polarization structures has a length of 3.2 micrometers in the longitudinal direction of said light waveguide.

11. An intensity-modulated-light generating device comprising the light-intensity modulation element as defined in claim 1, and a laser source for emitting infrared light to the wavelength conversion portion of the light waveguide.

12. The light-intensity modulation element as defined in either one of claims 1 to 10, wherein said light waveguide includes an additional phase adjustment portion associated with a pair of additional electrodes disposed in opposed relation to one another on opposite sides thereof, and an additional wavelength conversion portion for converting a part of infrared light introduced into said light waveguide to a second harmonic, said additional wavelength conversion portion having a plurality of polarization structures serially disposed in the longitudinal direction of said light waveguide in such a manner that their polarities in the thickness direction of said substrate are inverted periodically and alternately in the longitudinal direction of said light waveguide, said additional phase adjustment portion and said additional wavelength conversion portion being disposed adjacent to said second wavelength conversion portion and serially in the longitudinal direction of said light waveguide in this order.

13. The light-intensity modulation element as defined in claim 12, wherein said pair of additional electrodes are designed to apply a correction voltage to said additional phase adjustment portion according to a light-intensity modulation signal, so as to allow said light-intensity modulation element to output a zero level of light intensity when said light-intensity modulation signal has the lowest level.

14. An intensity-modulated-light generating device comprising the light-intensity modulation element as defined in claim 12 or 13, and a laser source for emitting infrared light to the wavelength conversion portion of the light waveguide.

15. The intensity-modulated-light generating device as defined in any of claims 12 to 14, which includes a fiber grating which connects between said laser source and said light-intensity modulation element.

16. A laser exposure unit comprising a laser exposure source consisting of the intensity-modulated-light generating device as defined in claim 14 or 15.

17. A photograph processing apparatus comprising the laser exposure unit as defined in claim 16, wherein:
the pair of electrodes are designed to apply a voltage to the phase adjustment portion according to a light-intensity modulation signal sent thereto in proportion to a density level of image data so as to modulate the intensity of laser light to be output from said laser exposure unit; and
said image data is exposed by guiding the laser light output from said laser exposure unit to a photosensitive material.
